# EUROPÄISCHE PATENTSCHRIFT

(11) **EP 3 633 363 B1**
(45) Veröffentlichungstag und Bekanntmachung des Hinweises auf die Patenterteilung: **13.04.2022**
(21) Anmeldenummer: 19197925.1
(22) Anmeldetag: 18.09.2019
(51) Int. Cl.: G01N 25/52

(54) **ELEKTROZÜNDUNG FÜR FLAMMPUNKTTESTER**
ELECTRIC IGNITION FOR FLASH POINT TESTER
ALLUMAGE PAR DÉCHARGE ÉLECTRIQUE POUR TESTEUR DE POINT D'ÉCLAIR

(30) Priorität: 20.09.2018 DE 102018123097
(43) Veröffentlichungstag der Anmeldung: 08.04.2020
(73) Patentinhaber: Anton Paar ProveTec GmbH, 15827 Blankenfelde-Mahlow (DE)
(72) Erfinder: Williams, Benjamin, 14542 Werder Havel (DE); Strasser, Florian, 12207 Berlin (DE); Erler, Xenia, 12309 Berlin (DE)
(74) Vertreter: Dilg, Haeusler, Schindelmann Patentanwaltsgesellschaft mbH

(56) Entgegenhaltungen:
- CN-U- 206 788 082
- DE-A1- 10 206 021
- DE-C- 25 185
- DE-C- 747 366
- US-A- 5 834 630

## Beschreibung

### Gebiet der Erfindung

Die vorliegende Erfindung betrifft eine Vorrichtung zum Zünden einer in einem Behälter befindlichen Probe für einen Flammpunktbestimmungstest, betrifft ferner eine Flammpunktbestimmungsapparatur und betrifft noch ferner ein Verfahren eines Zündens einer in einem Behälter befindlichen Probe während eines Flammpunktbestimmungstests.

### Hintergrund

Flammpunkt-Prüfapparaturen werden herkömmlicherweise zur Charakterisierung von Brennstoffen (z.B. Diesel, Benzin, Kerosin, Heizöl), Lösemitteln, Schmierölen oder Chemikalien verwendet. Per Definition ist der Flammpunkt die niedrigste Temperatur, bei der sich in einem offenen oder geschlossenen Gefäß oder Tiegel aus der zu prüfenden Flüssigkeit unter festgelegten Bedingungen Dämpfe (gasförmige Probe gemischt mit Luft) in solcher Menge entwickeln, dass sich im oder außerhalb des Behälters ein durch Fremdzündung entflammbares Probengas-Luft-Gemisch bildet.

Zur Bestimmung des Flammpunktes und/oder des Brennpunktes wird, vorzugsweise gemäß verschiedenen Standards, eine definierte Menge einer zu untersuchenden Probe (Substanz) in den Behälter (z.B. Messtiegel) gefüllt, kontrolliert erhitzt (insbesondere auf eine vorbestimmte Temperatur gebracht) und bei Bedarf gerührt. Dabei bildet sich kontinuierlich ein Gemisch aus flüssiger und gasförmiger Probe aus. Ab einer bestimmten Temperatur wird in periodischen Zeit- und/oder Temperaturabständen die Zündquelle in den Behälter eingeführt, um das gebildete Flüssig-Gas-Luft-Probengemisch zu entzünden. Wird bei einer bestimmten Probentemperatur eine Flamme detektiert, deren Brenndauer kleiner als 5 Sekunden ist, so ist der Flammpunkt ermittelt. Ist die Brenndauer länger als 5 Sekunden, so ist der Brennpunkt der Probe bestimmt.

Zur Flammpunktbestimmung eignen sich unterschiedliche Standardmethoden, die im Wesentlichen durch die Methoden nach i) Pensky-Martens, ii) Abel, iii) Abel-Pensky, iv) Tagliabue und v) Cleveland charakterisiert sind.

Zum Zünden der zu untersuchenden Probe wird herkömmlicherweise eine Zündquelle verwendet, welche beispielsweise einen, insbesondere offenen, Glühdraht oder eine Glühwendel umfasst. Alternativ kann herkömmlich die Zündung über eine Funkenstrecke zwischen zwei Elektroden oder über eine Gasflamme erfolgen.

US 5,176,449 A1 offenbart ein Gerät und ein Verfahren zum Bestimmen eines Flammpunktes einer Flüssigkeit oder eines festen Materials, wobei der Druck gemessen wird, welcher in der Messkammer nach einer Entzündung erhalten wird. Bei einer gegebenen Temperatur wird ein Dampf-Luft-Gemisch entzündet und der Druckanstieg aufgrund der Temperaturerhöhung wird als ein Maß für die Größe der Flamme zum Bestimmen des Flammpunktes verwendet. Die Zündung erfolgt mittels zweier Elektroden, die einen Funken erzeugen.

GB 1 279 396 A1 offenbart einen Apparat zum Prüfen des Flammpunktes eines entflammbaren Produktes. Zum Entzünden wird eine Entzündungsflamme in einen Tiegel eingeführt, in welchem sich die zu untersuchende Probe befindet.

US 3,913,600 A1 offenbart einen Apparat zum Überwachen und Kontrollieren der Zusammensetzung einer entflammbaren Gasmischung, wobei Entzündungen mittels einer Zündkerze durchgeführt werden. Dazu wird eine Hochspannung an Elektroden der Zündkerze angelegt.

US 2,170,056 A1 offenbart ein Gerät zum Detektieren der Konzentration von verbrennbaren Gasen. Zur Zündung wird eine Zündkerze verwendet, welche periodisch durch einen Synchronmotor betrieben wird.

GB 185 814 A1 offenbart einen Apparat zum Bestimmen des Flammpunktes von Ölen. Der Dampf wird elektrisch mittels eines Funkens oder mittels Spulen entzündet. Dabei sind mehrere Heizspulen unter einem Deckel eines Gefäßes angebracht. Sobald eine Spule geheizt wird, wird der Raum oberhalb des Öls zur Atmosphäre hin geöffnet. Die Spulen sind in diesem Dokument nicht im Detail beschrieben.

GB 1 257 323 A1 offenbart einen Flammpunktdetektor. Zum Zünden wird eine Zündkerze verwendet. Die Temperatur der Probe wird erhöht, bis ein mittels einer Zündkerze erzeugter Funke den Dampf entzündet. Dabei wird die Zündkerze mittels Pulsen von einem Generator aktiviert.

DE 552 706 C offenbart eine Einrichtung zur Prüfung brennbarer Stoffe, insbesondere von Schmierölen, wobei zur Aufnahme des zu untersuchenden Stoffes ein heizbarer Tiegel verwendet wird und wobei über dem Tiegel angeordnete elektrisch heizbare Spiralen zur Zündung der Öldämpfe bei der Flamm- und Brennpunktbestimmung sowie zur Anzeige der Flammbildung vorgesehen sind.

DE 1 598 631 A1 offenbart eine Messeinrichtung zur Bestimmung des Flammpunktes brennbarer Flüssigkeiten mittels Durchflusstiegels, der mit entsprechenden Heizelementen versehen ist. Dabei strömt das brennbare, erhitzte Dampf-Luft-Gemisch an einer Zündwendel vorbei, welche das Gemisch entzündet.

CN 206 788 082 U offenbart eine Messvorrichtung zur Bestimmung des Flammpunkts eines Petroleumproduktes, umfassend einen Elektrozünder und eine Verfahrvorrichtung zum Verfahren der Zündspitze.

Die aus dem Stand der Technik bekannten Zündvorrichtungen, welche für eine standardisierte Flammpunktbestimmung oder Brennpunktbestimmung verwendbar sind, sind empfindlich gegen Beschädigung und/oder nur mit entsprechend komplexen Treibern (z.B. zur Erzeugung von Hochspannung) betreibbar.

Somit ist es eine Aufgabe der vorliegenden Erfindung eine Zündvorrichtung, die für einen Flammpunktbestimmungstest verwendbar ist, zu schaffen, welche eine zuverlässige Zündung einer zu untersuchenden Probe gewährleistet, robust gegen Beschädigungen ist und durch einfache Treiberkomponenten betrieben werden kann. Insbesondere ist es eine Aufgabe der vorliegenden Erfindung, eine Vorrichtung bereitzustellen, die ohne Hochspannung, stabil und zuverlässig betrieben werden kann und robust gegen Beschädigungen ist.

### Zusammenfassung der Erfindung

Die Aufgabe wird durch den Gegenstand der unabhängigen Ansprüche gelöst. Die abhängigen Ansprüche spezifizieren besondere Ausführungsformen der vorliegenden Erfindung.

Gemäß der vorliegenden Erfindung ist bereitgestellt eine Vorrichtung zum Zünden einer in einem Behälter befindlichen Probe für einen Flammpunktbestimmungstest und/oder Brennpunktbestimmungstest, aufweisend: einen Elektrozünder, der eine Zündspitze mit umkapseltem elektrischen Draht aufweist; und eine Verfahreinrichtung, die zum Verfahren der Zündspitze des Elektrozünders an eine (z.B. spezifisch zur Elektrozündung) definierte Position innerhalb des Behälters ausgebildet ist.

Die Vorrichtung zum Zünden kann geeignet sein für einen standardisierten Flammpunktbestimmungstest und/oder Brennpunktbestimmungstest, welcher z.B. einer oder mehreren der folgenden Normen entspricht (jeweils zumindest für die am Anmeldungsdatum gültigen Versionen): ASTM D93, DIN EN ISO 2719, GB/T261, IP 34, JIS K 2265, ISO 13736, ISO 1516, ISO 1523, DIN 51755-1 (Abel-Pensky mit entsprechendem Zubehör); ASTM D56, ASTM D3934, ASTM D3941; ASTM D92, DIN EN ISO 2592, IP 36, IP 403. Ausführungsformen können weiteren hier nicht aufgeführten Normen entsprechen. Ausführungsformen der vorliegenden Erfindung unterstützten Methoden nach i) Pensky-Martens und/oder ii) Abel und/oder iii) Abel-Pensky und/oder iv) Tagliabue und/oder v) Cleveland.

Der Flammpunktbestimmungstest kann z.B. für Kerosin, Öl, allgemein Kohlenwasserstoff-haltige Substanzen, z.B. zur Qualitätstestung herangezogen werden. Der Flammpunktbestimmungstest kann z.B. mit einer der Versuchsaufbauten durchgeführt werden, die von Sir Frederik Abel, Adolf Marten, Berthold Pensky oder Charles J. Tagliabue entwickelt wurden.

Während des Flammpunktbestimmungstests kann die zu untersuchende Probe in einem geschlossenen oder in einem offenen Behälter aufgenommen sein. Beide Klassen von Flammpunkttests werden von Ausführungsformen der vorliegenden Erfindung unterstützt. Ausführungsformen der vorliegenden Erfindung unterstützen Testmethoden, wobei ein Gleichgewichtszustand, ein Nicht-Gleichgewichtszustand oder ein Schnell-Gleichgewichtszustands innerhalb des Behälters vorliegen kann. Nicht-Gleichgewichtszustands-Verfahren können z.B. einer oder mehreren der Normen DIN EN ISO 13736, ASTM D56, DIN EN ISO 2719, ASTM D93, DIN EN ISO 2592, ASTM D92 entsprechen. Gleichgewichtszustands-Verfahren können z.B. einer oder mehreren der Normen DIN EN ISO 1516, DIN EN ISO 1523, DIN EN 924, ASTM D3941, DIN 53213 entsprechen. Schnell-Gleichgewichtszustands-Verfahren können z.B. der Norm DIN EN ISO 3679, entsprechen.

Während der Durchführung des Flammpunktbestimmungstests kann die zu untersuchende Probe gerührt werden oder braucht nicht gerührt zu werden.

Während der Durchführung des Flammpunktbestimmungstests kann die Temperatur der Probe innerhalb des Behälters an einer oder mehreren Stellen (etwa in der Gasphase und/oder der Flüssigphase) gemessen werden. Ferner kann der atmosphärische Druck und/oder der Druck innerhalb des Behälters gemessen werden und die Messergebnisse können entsprechend korrigiert werden. Die Flammpunktbestimmungsapparatur gemäß Ausführungsformen der vorliegenden Erfindung kann z.B. ausgebildet sein, Flammpunkte in einem Bereich von -40°C bis +410°C zu bestimmen.

Teile des Elektrozünders und/oder der Zündspitze können im Wesentlichen zylinderförmige Form bzw. eine Zylindersymmetrie aufweisen. Die Zündspitze kann bei Betreiben des Elektrozünders z.B. eine Temperatur zwischen 900°C und 1500°C, insbesondere zwischen 1300°C und 1400°C, erreichen. Bei der Zündspitze (insbesondere bei einem Stirnende der Zündspitze oder nahe dem Stirnende der Zündspitze) kann die höchste Temperatur des Elektrozünders erreicht werden. Die Zündspitze kann eine Pyramiden- oder (Halb-)Kugelform aufweisen. Weitere geometrische Formen sind möglich.

Die Umkapselung des elektrischen Drahtes kann als Schutz des elektrischen Drahtes innerhalb der Zündspitze wirken. Der elektrische Draht (insbesondere eine unten näher beschriebene Glühwendel als Teil des elektrischen Drahtes) kann zur Umkapselung mit metallischem oder keramischem Material umgeben sein. Erfindungsgemäß ist die Umkapselung flüssigkeitsdicht und/oder gasdicht. Alternativ kann die Umkapselung auch aus anderen hitzeresistenten Materialien, beispielsweise aus Glas oder einem hitzebeständigen Polymer, gebildet sein. Die Umkapselung des elektrischen Drahtes kann auch zu einer im Wesentlichen homogenen Temperatur im Bereich der Zündspitze führen. Dabei kann die Zündspitze durch die Umkapselung und darin befindliche Glühwendel (und etwaiges Füllmaterial) gebildet sein. Die Zündspitze kann ein Ende des Elektrozünders bilden. Ein anderes Ende des Elektrozünders kann (z.B. durch Verschraubung) an einer Elektrozünderhalterung befestigt sein. Die Zündspitze kann z.B. einen Durchmesser (im Querschnitt) aufweisen, welcher z.B. zwei- bis fünfmal kleiner ist als ein Durchmesser des anderen Endes des Elektrozünders. Die Größe der Zündspitze (insbesondere ihr Querschnittsdurchmesser) kann gemäß von Vorgaben eines, vorzugsweise standardisierten, Flammpunktbestimmungstests gewählt werden, um eine Zündung in einem definierten Raumbereich (insbesondere innerhalb des Behälters) zu gewährleisten. Die Zündspitze kann z.B. stabförmig sein und aus homogenem Material gefertigt sein. Insbesondere kann die Zündspitze aus Keramik gefertigt sein und resistent gegen Temperaturen bis zu 1500°C oder gar 2000°C sein.

Die zur Elektrozündung definierte Position innerhalb des Behälters kann z.B. durch eine definierte Strecke unterhalb eines Deckels des Behälters oder durch eine definierte Strecke von der Flüssigkeitsoberfläche der zu untersuchenden Probe bis zu der Zündspitze oder durch eine definierte Strecke von einem Boden des Behälters definiert sein. Dabei kann die definierte Position insbesondere durch deren vertikale Komponente definiert sein, wobei eine laterale Komponente frei ist, so dass keine notwendigerweise definierte laterale Position angefahren werden muss. Wenn die definierte Position innerhalb des Behälters von der Zündspitze mittels der Verfahreinrichtung anfahrbar ist, kann ein standardisierter Flammpunktbestimmungstest durchgeführt werden.

Bei dem Behälter kann es sich insbesondere um einen im Wesentlichen zylinderförmigen Behälter mit Deckel handeln. Vorteilhafterweise kann der Elektrozünder durch Anlegen einer Gleichspannung an Enden des elektrischen Drahtes betrieben werden, so dass die Temperatur der Zündspitze stark ansteigt, so dass Zündtemperaturen erreicht werden können. Somit ist ein einfaches Betreiben des Elektrozünders gewährleistet. Durch die Umkapselung des elektrischen Drahtes ist dieser vor Beschädigung geschützt, somit robust. Ein eventuelles Anstoßen während des Verfahrens mittels der Verfahreinrichtung führt somit nicht zu einer Beschädigung des elektrischen Drahtes.

Gemäß der vorliegenden Erfindung ist der elektrische Draht derart, insbesondere flüssigkeitsdicht und/oder gasdicht, umkapselt, dass die Probe im flüssigen und/oder im gasförmigen Zustand den Draht nicht unmittelbar (oder auch nicht mittelbar) kontaktiert. Damit kann einerseits eine Verunreinigung der Probe aufgrund eines herkömmlicherweise erfolgenden Kontakts mit dem Draht vermieden werden und andererseits eine Verunreinigung oder Beeinträchtigung des Drahtes vermieden werden. Damit kann die Unversehrtheit des Drahtes während des Betriebes gewährleistet werden, so dass beispielsweise eine Heizkapazität nicht durch die Probe oder Bestandteile der Probe beeinträchtigt wird und auch die strukturelle Integrität des Drahtes gewährleistet ist. Somit kann ein Schutz vor Beschädigung gewährleistet werden, um einen Flammpunktbestimmungstest zuverlässig durchführen zu können.

Gemäß einer Ausführungsform der vorliegenden Erfindung ist die Verfahreinrichtung ausgebildet, die Zündspitze des Elektrozünders entlang einer geradlinigen Verfahrstrecke (insbesondere ohne Verkippung/Rotation) (z.B. nach unten und nach oben) zu verfahren, die insbesondere im Wesentlichen vertikal verläuft oder einen spitzen Winkel zur Vertikalen einschließt.

Die geradlinige Verfahrstrecke kann frei von Bögen oder Kurven sein, so dass die Zündspitze des Elektrozünders insbesondere ohne eine Verkippung und ohne Rotationsbewegungsanteile an die definierte Position (z.B. von einer Parkposition oberhalb des Behälters, insbesondere oberhalb eines Deckels des Behälters) bewegt bzw. verfahren werden kann. Somit ist eine einfache Bewegung ermöglicht, was die Verfahreinrichtung vereinfacht. Wenn die Verfahrstrecke im Wesentlichen vertikal oder einen spitzen Winkel zur Vertikalen einschließend verläuft, kann die Zündspitze insbesondere durch eine relativ kleine Deckelöffnung eines Deckels des Behälters schnell und zuverlässig an die definierte Position innerhalb des Behälters bewegt werden. Wenn die geradlinige Verfahrstrecke einen Winkel zur Vertikalen einschließt, so kann beispielsweise vorteilhafterweise ein Rührer und/oder ein Temperatur- bzw. Messfühler von oben durch den Deckel in den Behälter eingeführt werden, ohne dass der Elektrozünder oder Teile des Elektrozünders im Wege sind. Die Zündspitze kann somit mittels der Verfahreinrichtung schräg von oben (z.B. durch eine Deckenöffnung) an die definierte Position innerhalb des Behälters bewegt werden.

Gemäß einer Ausführungsform der vorliegenden Erfindung weist die Verfahreinrichtung ferner einen Elektromotor, vorzugsweise mit einem Kurbelantrieb, auf, der mit dem Elektrozünder gekoppelt ist. Der Elektromotor vollführt bei Aktivierung eine Rotationsbewegung, welche mittels des Kurbeltriebes in eine Translationsbewegung umgesetzt werden kann. Eine exzentrisch zu einer Achse des Elektromotors angeordnete Welle kann z.B. in eine ovale Aussparung eingreifen, die mit einer Elektrozünderhalterung gekoppelt ist. Bei Betätigung des Elektromotors kann die exzentrisch angeordnete Welle innerhalb der ovalen Aussparung ihre Position verändern und an Innenbegrenzungsflächen der ovalen Aussparung anliegen. Durch den dabei auftretenden Druck an verschiedene Begrenzungsflächen der ovalen Aussparung wird die damit verbundene Elektrozünderhalterung entlang der geradlinigen Verfahrstrecke bewegt. Die Bewegungsgeschwindigkeit braucht z.B. bei konstanter Drehgeschwindigkeit des Motors nicht konstant sein. Insbesondere kann zum Beginn und zum Ende der Bewegung der Zündspitze die Geschwindigkeit der geradlinigen Bewegung geringer sein als in einem mittleren Bereich zwischen Endpunkten der Bewegung. Damit kann auch die Beschädigung von Komponenten der Vorrichtung vermieden werden. Der Kurbeltrieb ermöglicht eine einfache Konversion einer Rotationsbewegung in eine translatorische Bewegung, so dass ein einfacher Antrieb ermöglicht ist. Andere mechanische Komponenten können statt oder zusätzlich zu dem Kurbeltrieb vorgesehen sein, um die vom Motor erzeugte Rotationsbewegung in eine Translationsbewegung umzusetzen. Dazu kann z.B. ein Schneckengewinde an der Motorwelle vorgesehen sein, das in eine Zahnstange eingreift, die mit dem Elektrozünder gekoppelt ist. Auch pneumatische oder hydraulische Antriebe sind möglich.

Gemäß einer Ausführungsform der vorliegenden Erfindung weist die Verfahreinrichtung eine Elektrozünderhalterung auf, mittels der der Elektrozünder halterbar ist, insbesondere verschraubbar ist, und der Draht (z.B. mit einem Treiber) elektrisch verbindbar ist und mittels des Drahtes durch ein Gehäuse gekapselt ist. Somit können flexible Kabel, welche herkömmlich offen liegen, vermieden werden, um somit eine Bedienung zu vereinfachen und insbesondere Kabelgewirr oder Kabelverknotungen ("Kabelsalat") oder eine Beschädigung von Kabeln zu vermeiden. Der Elektrozünder kann z.B. an die Elektrozünderhalterung angeschraubt werden, wobei gleichzeitig Anschlusskontakte (zumindest zwei Anschlusskontakte) des Drahtes bzw. zweier Drahtenden mit elektrischen Kontakten innerhalb der Elektrozünderhalterung elektrisch verbunden werden. Innerhalb der Elektrozünderhalterung können flexible Kabel vorhanden sein, welche aufgrund der Flexibilität ein Verfahren der Zündspitze ermöglichen. Diese innerhalb der Elektrozünderhalterung vorhandenen flexiblen Kabel sind jedoch durch ein Gehäuse (der Elektrozünderhalterung) umgeben und somit nicht von außen zugänglich und sichtbar. Damit ist eine einfache Handhabung der Vorrichtung ermöglicht und lose Drähte kommen nicht mit anderen Komponenten oder mit einem Benutzer in Kollision bzw. in Berührung.

Gemäß einer Ausführungsform der vorliegenden Erfindung weist die Verfahreinrichtung eine, insbesondere hülsenförmige, Führung mit einer durch parallele Innenwände begrenzte Führungsöffnung auf, durch die zumindest ein Teil der Elektrozünderhalterung und/oder zumindest ein Teil des Elektrozünders hindurchgeführt ist, wobei insbesondere eine Außenoberfläche eines Teils der Elektrozünderhalterung und/oder eines Teils des Elektrozünders beim Verfahren des Elektrozünders an den parallelen Innenwänden der Führung entlang gleitet. Die Führung kann gewährleisten, dass die Bewegung der Zündspitze entlang der geradlinigen Verfahrstrecke erfolgt. Insbesondere kann dadurch die Zündspitze entlang der durch die Führung vorgegebenen Verfahrstrecke in den Behälter abgesenkt und aus diesem heraufbewegt werden. Damit kann eine Kollision mit z.B. Teilen des Behälters bzw. Teilen von Wänden des Behälters und/oder Teilen eines Deckels vermieden werden. Die Innenwände bzw. die Führungsöffnung kann z.B. im Wesentlichen Zylindersymmetrie oder auch eine Zylinderform aufweisen. Damit kann in einfacher Weise z.B. eine zylinderförmige Elektrozünderhalterung zuverlässig geführt werden. Auch andere geometrische Formen der Innenwände bzw. der Führungsöffnung sind denkbar.

Gemäß einer Ausführungsform der vorliegenden Erfindung weist die Vorrichtung ferner eine Gaszuführeinrichtung mit einer Gasleitung mit Gasaustrittsöffnung auf, wobei die Gasleitung abschnittsweise parallel versetzt zu einer Längsrichtung (z.B. eines Schaftes/Hülse) des Elektrozünders, vorzugsweise reversibel, (insbesondere an der Elektrozünderhalterung und/oder an einem Teil des Elektrozünders) anbringbar ist, wobei die angebrachte Gasleitung bei Verfahren der Zündspitze des Elektrozünders mittels der Verfahreinrichtung synchron mit verfahren wird, wobei die Verfahreinrichtung insbesondere ausgebildet ist, die Gasaustrittsöffnung an eine (z.B. spezifisch zur Gaszündung) definierte Position innerhalb des Behälters zu verfahren.

Die Gaszuführeinrichtung ist für eine Gaszündung der zu untersuchenden Probe vorgesehen. Die Gaszuführeinrichtung ist ein optionales Merkmal, d.h. nicht in allen Ausführungsformen gemäß der Erfindung enthalten. Die Gaszuführeinrichtung ist anbringbar und abnehmbar z.B. an der Elektrozünderhalterung. Damit sind auch Flammpunktbestimmungstests unterstützt, welche eine Gaszündung erfordern. Die Gaszuführeinrichtung umfasst keine (zusätzliche) spezifisch oder ausschließlich für die Gaszuführeinrichtung vorgesehene Verfahreinrichtung, sondern wird durch die(selbe) Verfahreinrichtung verfahren, mit der auch der Elektrozünder (insbesondere entlang der geradlinigen Verfahrstrecke) verfahren wird. Damit kann die Vorrichtung auch für Gaszündung erweitert sein, ohne zusätzliche Verfahrkomponenten zu erfordern. Die Verfahrstrecke der Gasaustrittsöffnung ist parallel zu (oder insbesondere im Wesentlichen kollinear mit) der Verfahrstrecke des Elektrozünders bzw. der Zündspitze des Elektrozünders. Die zur Gaszündung definierte Position der Gasaustrittsöffnung kann gleich sein oder verschieden sein von der zur Elektrozündung definierten Position der Zündspitze. Damit können verschiedene Standards oder Normen von Flammpunktbestimmungstests unterstützt sein.

Gemäß einer Ausführungsform der vorliegenden Erfindung ist die Gasaustrittsöffnung der Gasleitung unterhalb der Zündspitze des Elektrozünders, insbesondere unterhalb entlang der Längsrichtung des Elektrozünders, angeordnet, so dass mittels Betreibens des Elektrozünders ein aus der Gasaustrittsöffnung austretendes Gas entzündbar ist.

Gemäß einer Ausführungsform der vorliegenden Erfindung weist ist die Gasleitung eine derart ausgebildete Biegung auf, dass die Gasaustrittsöffnung unterhalb der Zündspitze des Elektrozünders, insbesondere unterhalb entlang der Längsrichtung des Elektrozünders, angeordnet ist und derart, dass mittels Betreibens des Elektrozünders ein aus der Gasaustrittsöffnung austretendes Gas entzündbar ist. Somit kann der Elektrozünder zur Zündung des aus der Gasaustrittsöffnung austretenden Gases verwendet werden, welches wiederum, während eines Flammpunktbestimmungstests, zum Zünden der innerhalb des Behälters befindlichen Probe verwendet wird. Der Elektrozünder muss dabei nicht (von der Verfahreinrichtung bzw. der Elektrozünderhalterung) entfernt werden, sondern kann in seiner Position unverändert bleiben. Insbesondere kann die Gaszuführeinrichtung eingerichtet sein, um in einem Flammpunktbestimmungstest als Zündung eingesetzt werden zu können, ohne den Elektrozünder in seiner Position oder Orientierung zu verändern. Damit kann eine Handhabung der Vorrichtung vereinfacht werden, insbesondere ein (zeit-)aufwändiger bzw. komplizierter Umbau der Vorrichtung zum Ermöglichen einer Gaszündung, vermieden werden. Damit kann z.B. ein Flammpunktbestimmungstest oder mehrere Flammpunktbestimmungstests, welche einerseits Elektrozündung, andererseits Gaszündung erfordern, in kürzerer Zeit durchgeführt werden. Die Gasleitung kann oberhalb und unterhalb der Biegung gerade Abschnitte aufweisen.

Gemäß einer Ausführungsform der vorliegenden Erfindung ist zur, vorzugsweise reversiblen, Anbringung der Gasleitung ein Gasleitungshalter vorgesehen, der eine, insbesondere zylinderförmige, Durchgangsöffnung aufweist, durch die die Gasleitung geführt und fixierbar ist, insbesondere mittels einer Schraube, und der ferner Befestigungsmittel, insbesondere eine Klammer und/oder eine Klemme, aufweist, die ausgebildet sind, die Gaszuführeinrichtung an einem Teil des Elektrozünders und/oder einem Teil der Elektrozünderhalterung, insbesondere elastisch und/oder mittels einer Schraube und/oder magnetisch, zumindest teilweise zu fixieren. Damit kann eine reversible Befestigung der Gasleitung erreicht werden. Der Gasleitungshalter kann z.B. in eine z.B. zylinderförmige Einbuchtung oder eine ringförmige Einbuchtung an der Elektrozünderhalterung befestigt werden, insbesondere durch Formschluss und/oder Kraftschluss. Damit kann die Gasleitung in einfacher Weise bei Bedarf angebracht oder entfernt werden. Eine vertikale definierte Positionierung der Gasleitung (bzw. insbesondere der Gasaustrittsöffnung am Ende der Gasleitung) kann insbesondere aufgrund der Positionierung der ringförmigen Einbuchtung an der Elektrozünderhalterung definiert oder gegeben sein. Eine elastische Halterung kann eine Handhabung vereinfachen, während eine Halterung mit (zusätzlicher) Schraube eine zuverlässige und feste Halterung gewährleisten kann.

Gemäß einer Ausführungsform der vorliegenden Erfindung ist die Durchgangsöffnung, innerhalb derer die Gasleitung fixiert ist, an einem abgewinkelten Ende eines im Wesentlichen vertikal verlaufenden Haltearms vorgesehen, der an dem Befestigungsmittel, insbesondere vertikal verstellbar, angebracht ist.

Die Gasleitung kann geradlinig durch die Durchgangsöffnung verlaufen. Aufgrund der Abwinklung des Haltearms kann die Gasaustrittsöffnung der Gasleitung unterhalb der Zündspitze des Elektrozünders, insbesondere unterhalb entlang der Längsrichtung des Elektrozünders, angeordnet sein, so dass mittels Betreibens des Elektrozünders ein aus der Gasaustrittsöffnung austretendes Gas entzündbar ist.

Gemäß einer Ausführungsform der vorliegenden Erfindung ist ferner ein Stift vorgesehen, der durch eine Durchgangsöffnung der Klammer (oder Klemme) des Gasleitungshalters hindurch und ein Loch des Elektrozünders und/oder der Elektrozünderhalterung steckbar ist, um eine definierte vertikale Positionierung der Gasaustrittsöffnung relativ zu der Zündspitze zu erreichen. Statt eines Stiftes kann ein einfacher Vorsprung an einer Innenoberfläche der Klammer (z.B. integriert) vorgesehen sein, welcher Vorsprung in ein Loch (oder eine Mulde) einer Außenoberfläche der Elektrozünderhalterung eingreift, insbesondere einschnappt. Damit kann eine genaue Positionierung der Gasaustrittsöffnung innerhalb des Behälters erreicht werden.

Gemäß einer Ausführungsform der vorliegenden Erfindung ist ferner ein Magnet vorgesehen, auf den von einem an einem Teil des Elektrozünders und/oder der Elektrozünderhalterung fixierten Magneten oder magnetisierbaren Material eine magnetische Anziehungskraft ausgeübt wird, um eine definierte vertikale Positionierung der Gasaustrittsöffnung relativ zu der Zündspitze zu erreichen.

Gemäß einer Ausführungsform der vorliegenden Erfindung ist die Verfahreinrichtung ausgebildet, in Abhängigkeit von einer gewünschten Zündungsart (z.B. Elektrozündung oder Gaszündung), den Elektrozünder (und/oder die Elektrozünderhalterung) selektiv um eine erste Verfahrstrecke oder eine zweite Verfahrstrecke nach unten zu verfahren, um entweder die Zündspitze des Elektrozünders (bei ausgewählter Elektrozündung) oder bei angebrachter Gasleitung (und ausgewählter Gaszündung), die Gasaustrittsöffnung an die jeweils definierte Position (z.B. innerhalb des Behälters) zu bewegen. Zum Verfahren der Gasaustrittsöffnung an die definierte Position (zur Gaszündung) kann die Verfahrstrecke kürzer sein als die Verfahrstrecke, welche bei Elektrozündung mittels der Zündspitze vorgesehen ist. Die Gasaustrittsöffnung kann somit unterhalb der Zündspitze positioniert sein, um vorteilhafterweise bei Bedarf ein aus der Gasaustrittsöffnung austretendes Gas mittels der betriebenen Zündspitze des Elektrozünders entzünden zu können.

Gemäß einer Ausführungsform der vorliegenden Erfindung ist der Elektrozünder als Glühkerze (z.B. für den Automobilbereich, z.B. zum Vorglühen eines Dieselmotors), insbesondere als Metall- oder Keramik-Glühkerze ausgebildet. Damit kann der Elektrozünder konventionell erhältlich sein, was somit die Kosten der Vorrichtung senken kann.

Gemäß einer Ausführungsform der vorliegenden Erfindung weist die Zündspitze eine aus Metall und/oder Keramik-gefertigte, an einem vorderen Ende geschlossene (z.B. die Umkapselung bildende) Hülse auf (z.B. zylinderförmige Hülse), in deren Hohlraum in einem vorderen Bereich eine Glühwendel angeordnet ist. Die Glühwendel kann die gesamte Zündspitze auf eine zur Zündung der Probe erforderliche Temperatur aufheizen. Um ein schnelles Aufheizen zu gewährleisten, wird die an den Elektrozünder angelegte Spannung geregelt.

Der Hohlraum der Hülse kann evakuiert oder auch mit einem geeigneten Medium gefüllt sein, beispielsweise Gas oder Sand.

Gemäß einer Ausführungsform der vorliegenden Erfindung weist der Elektrozünder ferner in dem Hohlraum in einem hinteren (oder mittleren) Bereich eine Regelwendel auf, insbesondere mit einem mit der Temperatur ansteigenden Widerstand, die mit der Glühwendel elektrisch verbunden ist. Damit kann ein schnelles Aufheizen erreicht werden, wenn eine konstante Spannung angelegt wird, wobei die Heizleistung bei konstanter Spannung mit steigender Temperatur abnehmen kann, um somit langsam einen Zielwert einer Temperatur der Zündspitze zu erreichen. Derartige Glühwendeln und Regelwendeln können in konventionell erhältlichen Glühkerzen vorhanden sein.

Die Vorrichtung kann ferner gemäß einer Ausführungsform der vorliegenden Erfindung ein Treibermodul aufweisen, das ausgebildet und verbunden ist, eine Gleichspannung zwischen Enden des Drahtes des Elektrozünders anzulegen, um einen elektrischen Gleichstrom, insbesondere zwischen 5 Ampere und 15 Ampere, durch die Glühwendel zu führen. Somit muss keine Hochspannungsversorgung vorhanden sein, um eine Zündung mittels des Elektrozünders zu erreichen. Ferner ist kein gepulster Betrieb erforderlich, die Gleichspannung kann ununterbrochen bzw. bei gewünschter Elektrozündung kontinuierlich (jedenfalls während einer gewünschten Zündzeit) angelegt bleiben. Damit kann die Vorrichtung ferner gegenüber herkömmlich verwendeten Vorrichtungen vereinfacht sein.

Gemäß einer Ausführungsform der vorliegenden Erfindung ist eine Flammpunktbestimmungsapparatur (die z.B. auch zur Bestimmung des Brennpunktes ausgebildet ist) bereitgestellt, welche aufweist: einen Behälter zum Aufnehmen einer zu untersuchenden (flüssigen und/oder gasförmigen) Probe; insbesondere einen (optionalen) Deckel zum Verschließen des Behälters (insbesondere an einer Oberseite), wobei der Deckel eine verschließbare Deckelöffnung aufweist; eine Heizeinrichtung zum Heizen der Probe mit einer definierten Heizrate und/oder auf eine definierte Temperatur; und eine Vorrichtung zum Zünden der in dem Behälter befindlichen Probe gemäß einer der vorangehend beschriebenen Ausführungsformen.

Falls ein Deckel vorhanden ist, ist die Vorrichtung zum Zünden derart angeordnet, dass bei Verfahren der Zündspitze des Elektrozünders an die definierte Position innerhalb des Behälters die Zündspitze durch die Deckelöffnung geführt wird.

Der Behälter kann z.B. im Wesentlichen zylinderförmig sein. Die Probe kann im flüssigen Zustand z.B. etwa 1/3 bis 2/3 des Behälterinnenraumes ausfüllen. Oberhalb des Flüssigkeitsspiegels der Probe innerhalb des Behälters kann die Probe im gasförmigen Zustand, insbesondere vermischt mit Luft vorhanden sein.

Nicht alle Ausführungsformen der Flammpunktbestimmungsapparatur umfassen einen Deckel, denn einige Flammpunktbestimmungstests können bei einem offenen Behälter durchgeführt werden. Der Deckel des Behälters ist somit optional. Die verschließbare Deckelöffnung kann das Einführen eines Zünders, insbesondere des Elektrozünders und auch der Gasaustrittsöffnung der (optionalen) Gasleitung ermöglichen, so dass die Flammpunktbestimmungsapparatur zur Zündung mittels Elektrozündung und zur Zündung mittels Gaszündung ausgebildet sein kann. Während eines Flammpunktbestimmungstests kann die Probe innerhalb des Behälters mittels der Heizeinrichtung (z.B. eine elektrische Heizeinrichtung oder eine Verbrennungsheizeinrichtung) (oder allgemeiner Temperiereinrichtung zum Heizen und zum Kühlen) auf eine bestimmte Temperatur aufgeheizt (oder gekühlt) werden, woraufhin die (zunächst verschlossene) Deckelöffnung geöffnet wird (z.B. mittels eines Schiebers), um entweder die Zündspitze des Elektrozünders oder die Gasaustrittsöffnung der Gasleitung an die jeweils definierte Position innerhalb des Behälters zu bewegen. Daraufhin kann der Elektrozünder betrieben werden, um entweder selbst als Zünder zu wirken oder um ein aus der Gasaustrittsöffnung austretendes Gas zu entzünden, mittels dessen die Probe entzündet wird. Ob eine Entzündung der Probe erfolgt, kann durch ein oder mehrere Detektoren ermittelt werden, welche durch andere Eintrittsöffnungen innerhalb des Deckels in den Behälter geführt werden können oder ohne durch den Deckel zu treten, in den offenen Behälter reichen. Konnte das Vorhandensein des Flammpunktes nicht detektiert werden, so kann die Probe auch auf eine andere (z.B. höhere) Temperatur gebracht werden, woraufhin ein weiterer Zündungstest erfolgen kann.

Es sollte verstanden werden, dass Merkmale, welche individuell oder in irgendeiner Kombination, im Zusammenhang mit einer Vorrichtung zum Zünden einer in einem Behälter befindlichen Probe für einen Flammpunktbestimmungstest genannt wurden, erläutert wurden oder bereitgestellt wurden, auch, individuell oder in irgendeiner Kombination, für ein Verfahren eines Zündens einer in einem Behälter befindlichen Probe während eines Flammpunktbestimmungstests anwendbar sind und umgekehrt, gemäß Ausführungsform der vorliegenden Erfindung.

Gemäß der vorliegenden Erfindung ist ein Verfahren eines Zündens einer in einem Behälter befindlichen Probe während eines Flammpunktbestimmungstests und/oder Brennpunktbestimmungstests bereitgestellt, aufweisend: Verfahren einer Zündspitze eines Elektrozünders oder einer Gasaustrittsöffnung einer mit dem Elektrozünder gekoppelten Gasleitung an eine definierte Position innerhalb des Behälters, wobei der

Elektrozünder eine Zündspitze mit umkapseltem elektrischen Draht aufweist, wobei der elektrische Draht derart umkapselt ist, dass die Probe im flüssigen und/oder im gasförmigen Zustand den Draht nicht unmittelbar kontaktiert. Ausführungsformen der vorliegenden Erfindung unterstützen alle zum Anmeldungsdatum bekannten Flammpunktbestimmungstechniken, auch solche, welche einen offenen Behälter erfordern und welche z.B. auch eine Horizontalbewegung des Zünders erfordern. Dazu kann die Verfahreinrichtung auch ausgebildet sein, die Zündspitze in einer horizontalen Richtung zu bewegen, insbesondere innerhalb des Behälters an lateral verschiedene Positionen.

### Kurze Beschreibung der Zeichnungen

Fign. 1A und 1B illustrieren in einer schematischen Seitenschnittansicht eine Flammpunktbestimmungsapparatur gemäß einer Ausführungsform der vorliegenden Erfindung, welche eine Vorrichtung zum Zünden gemäß einer Ausführungsform der vorliegenden Erfindung umfasst, in zwei verschiedenen Verfahrzuständen, welche z.B. in einem Verfahren eines Zündens einer in einem Behälter befindlichen Probe während eines Flammpunktbestimmungstests gemäß einer Ausführungsform der vorliegenden Erfindung eingenommen werden;
Fig. 2 illustriert in einer schematischen perspektivischen Darstellung einen Teil einer Flammpunktbestimmungsapparatur gemäß einer Ausführungsform der vorliegenden Erfindung;
Fig. 3 illustriert in einer schematischen perspektivischen Darstellung einen Teil einer Flammpunktbestimmungsapparatur mit einer Gaszuführeinrichtung gemäß einer Ausführungsform der vorliegenden Erfindung;
Fig. 4 illustriert in einer schematischen Längsschnittansicht einen Elektrozünder gemäß einer Ausführungsform der vorliegenden Erfindung, welcher gemäß einer Ausführungsform der vorliegenden Erfindung in einer Vorrichtung zum Zünden einer in einem Behälter befindlichen Probe für einen Flammpunktbestimmungstest umfasst ist; und
Fign. 5 und 6 illustrieren Gaszuführeinrichtungen gemäß weiteren Ausführungsformen der vorliegenden Erfindung.

### Detaillierte Beschreibung von Ausführungsformen

In Funktion und/oder Struktur gleiche oder ähnliche Elemente sind in verschiedenen Figuren mit Bezugszeichen bezeichnet, welche sich lediglich in der ersten Ziffer unterscheiden. Eine Beschreibung eines in einer bestimmten Ausführungsform nicht im Detail erläuterten Elementes kann einer entsprechenden Beschreibung dieses Elementes in einer anderen Ausführungsform entnommen werden.

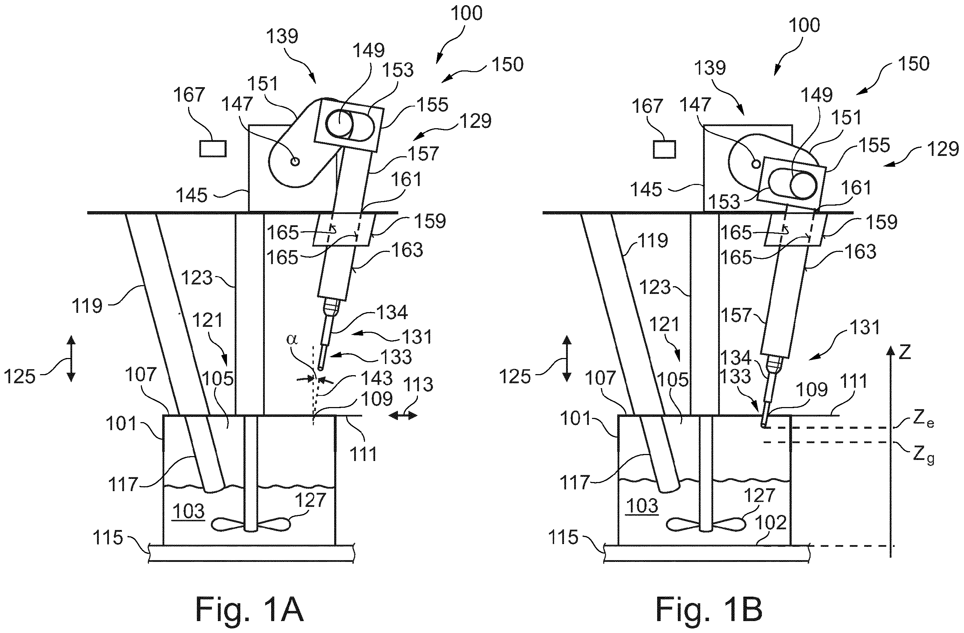

Die in **Fign. 1A und 1B** in zwei verschiedenen Verfahrzuständen illustrierte Flammpunktbestimmungsapparatur 100 gemäß einer Ausführungsform der vorliegenden Erfindung umfasst einen Behälter 101 zum Aufnehmen einer zu untersuchenden Probe, welche einen flüssigen Anteil 103 und einen gasförmigen Anteil (bzw. Probengas-Luftgemisch) 105 aufweist. Die Flammpunktbestimmungsapparatur 100 umfasst ferner einen Deckel 107 zum Verschließen des Behälters 101 an einer Oberseite, wobei der Deckel eine verschließbare Deckelöffnung 109 aufweist. In der illustrierten Ausführungsform ist die Deckelöffnung 109 mittels eines Schiebers 111 verschließbar und öffenbar, wozu der Schieber 111 z.B. entlang der durch den Pfeil 113 angezeigten Richtungen verschoben wird.

Fig. 1A illustriert den Zustand, in welchem der Deckel durch den Schieber 111 verschlossen ist, wogegen Fig. 1B den Zustand illustriert, in welchem der Schieber 111 zurückgezogen ist, so dass die Deckelöffnung 109 offen ist und das Innere des Behälters 101 in Kontaktmit der Umgebung steht.

Die Flammpunktbestimmungsapparatur 100 umfasst ferner eine Heizeinrichtung 115, welche zum Heizen der Probe 103, 105 innerhalb des Behälters auf eine bestimmte Temperatur eingerichtet ist. Zur Temperaturmessung umfasst die Flammpunktbestimmungsapparatur 100 optional Messfühler 117, welche z.B. zum Messen der Temperatur innerhalb der flüssigen Phase 103 ausgebildet sind. Die Messfühler 117 sind durch eine weitere Öffnung in dem Deckel 107 in das Innere des Behälters 101 eingeführt, wozu ein Stab 119 vorgesehen ist.

Optional umfasst die Flammpunktbestimmungsapparatur 100 auch einen Rührer 121, welcher einen Rührstab 123 aufweist, welcher durch den Deckel 107 geführt ist und um eine im Wesentlichen vertikale Richtung 125 drehbar gelagert ist. Am unteren Ende des Rührstabes 123 innerhalb des Behälters 101 sind Rührschaufeln 127 befestigt. Mittels des Rührers 121 kann die Probe 103, 105 z.B. während eines Flammpunktbestimmungstests gerührt werden. Der Rührer 121 ist optional, daher nicht in allen Ausführungsformen notwendig vorhanden.

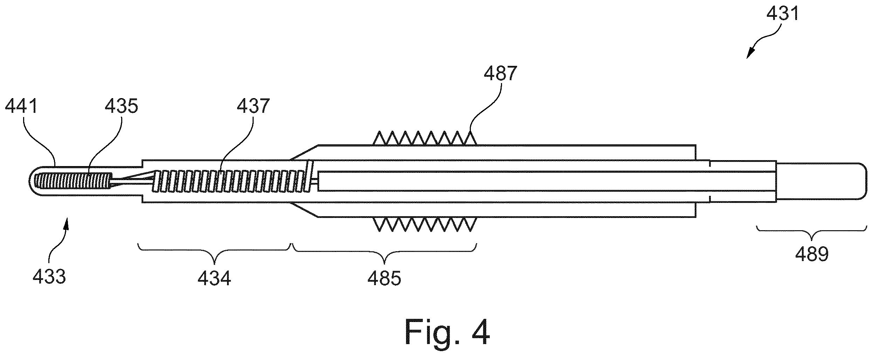

Die Flammpunktbestimmungsapparatur 100 umfasst ferner eine Vorrichtung 129 zum Zünden der in dem Behälter 101 befindlichen Probe 103, 105 gemäß einer Ausführungsform der vorliegenden Erfindung. Die Vorrichtung 129 zum Zünden der in dem Behälter 101 befindlichen Probe 103, 105 umfasst einen Elektrozünder 131, der eine Zündspitze 133 mit umkapseltem (in Figuren 1A und 1B nicht illustrierten) elektrischen Draht aufweist. Der elektrische Draht kann z.B. eine Glühwendel 435 und eine Regelwendel 437 umfassen, wie in **Fig.** 4 als einem Beispiel eines Elektrozünders 431 gemäß einer Ausführungsform der vorliegenden Erfindung in einer Längsschnittansicht illustriert ist. Der Elektrozünder 131 in Fig. 1 kann wie der in Fig. 4 illustrierte Elektrozünder 431 aufgebaut sein.

Der in Fig. 4 illustrierte Draht 435, 437 des Elektrozünders 131, 431 ist flüssigkeitsdicht und gasdicht umkapselt mittels einer Z Umkapselung 441, welche z.B. gesinterte Keramik umfassen kann. Die Umkapselung kann im Bereich der Zündspitze 433, innerhalb derer die Heizwendel 435 angeordnet ist, eine Zylinderform aufweisen. Die Umkapselung kann sich auch in dem Regelwendel-Bereich 134, 434, in dem sich die Regelwendel 437 befindet, fortsetzen.

Die Vorrichtung 129 zum Zünden umfasst ferner eine Verfahreinrichtung 139, die zum Verfahren der Zündspitze 133 des Elektrozünders 131 an eine (zur Elektrozündung) definierte Position ze, z.B. durch einen vertikalen Abstand von einem Boden 102 des Behälters 101 oder durch einem vertikalen Abstand von dem Deckel 107 definiert, verfahren werden kann. Eine Gasaustrittsöffnung einer weiter unten beschriebenen Gasleitung kann z.B. zu einer Position zg verfahren werden, die gleich oder verschieden von ze sein kann.

Die Verfahreinrichtung 139 ist ausgebildet, die Zündspitze 133 des Elektrozünders 131 entlang einer geradlinigen Verfahrstrecke 143 nach unten und nach oben zu verfahren. In der illustrierten Ausführungsform schließt die Verfahrstrecke 143 einen spitzen Winkel α (z.B. zwischen 5° und 40°) mit der vertikalen Richtung 125 ein.

Die Verfahreinrichtung umfasst einen Elektromotor 145 mit einer Welle 147, an der über ein Verbindungsstück 151 eine exzentrisch angeordnete Welle 149 angebracht ist. Die exzentrisch angeordnete Welle 149 greift in eine ovale Ausnehmung 153 eines weiteren Verbindungsstückes 155, welches mit einer Elektrozünderhalterung 157 verbunden ist. Das Verbindungsstück 151, die exzentrische Welle 159, die ovale Ausnehmung 153 und das weitere Verbindungsstück 155 bilden einen Kurbeltrieb 150, welcher ausgebildet ist, eine Drehbewegung des Elektromotors 145 in eine Translationsbewegung, d.h. geradlinige Bewegung umzusetzen. Bei z.B. einer Drehung der Motorwelle 147 um weniger als 90° wird somit die Zündspitze 133 von der in Fig. 1A illustrierten Position (z.B. Parkposition) in die zur Zündung in einem Flammpunktbestimmungstest vorgesehene definierte Position (vertikale Position ze) entlang der geradlinigen Verfahrstrecke 143 verfahren, wie in Fig. 1B illustriert ist. Die Zündspitze 133 in Fig. 1B befindet sich unterhalb des Deckels 107 und innerhalb des Behälters 101.

Die Elektrozünderhalterung 157 ist vorgesehen, um den Elektrozünder 131 zu halten, wobei der Elektrozünder 131 insbesondere durch eine Verschraubung mit der Elektrozünderhalterung 157 verbindbar ist und in Fign. 1A und 1B verbunden dargestellt ist.

Die Verfahreinrichtung 139 weist ferner eine Führung 159 mit einer durch Innenwände 165 begrenzte Führungsöffnung 161 auf, durch die zumindest ein Teil der Elektrozünderhalterung 157 hindurchgeführt ist. Dabei gleiten Teile einer Außenoberfläche 163 der Elektrozünderhalterung 157 an parallelen die Führungsöffnung 161 begrenzenden Innenwänden 165 der Führung 159 entlang.

Die Flammpunktbestimmungsapparatur 100 weist ferner ein Treibermodul 167 auf, das ausgebildet und mit dem Elektrozünder 131 (über nicht illustrierte elektrische Kabel) verbunden ist, um eine Gleichspannung zwischen zwei Enden des Drahtes (z.B. 435, 437) des Elektrozünders 131 anzulegen, um einen elektrischen Gleichstrom insbesondere durch die Glühwendel (z.B. 435 in Fig. 4) zu führen.

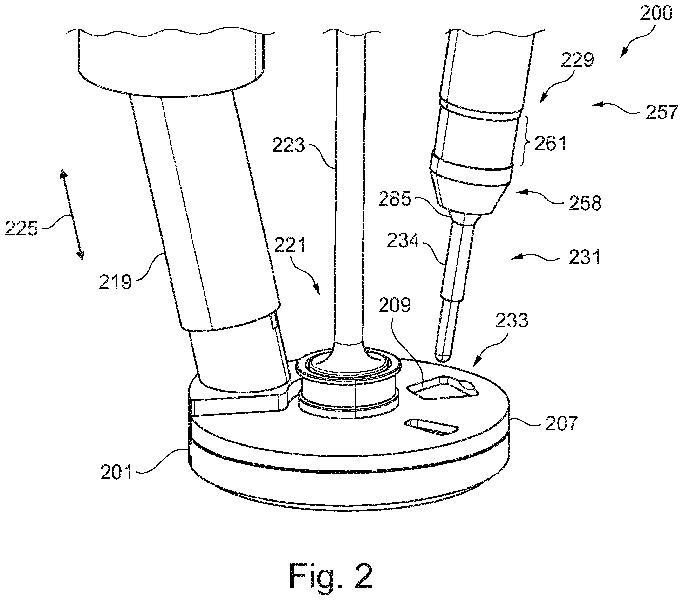

**Fig.** 2 illustriert in einer schematischen perspektivischen Darstellung einen Teil einer Flammpunktbestimmungsapparatur 200 gemäß einer weiteren Ausführungsform der vorliegenden Erfindung. Fig. 2 illustriert den Zustand, in welchem eine verdeckte Zündspitze 233 des Elektrozünders 231 an einer bestimmten Position innerhalb des Behälters 201 positioniert ist.

Der Elektrozünder 231 der Flammpunktbestimmungsapparatur 200 umfasst eine durch die Deckelöffnung 209 des Deckels 207 geführte und durch den Deckel 207 teilweise verdeckte Zündspitze 233, welche durch einen keramischen Mantel nach außen begrenzt ist und in dessen Inneren eine Glühwendel angeordnet ist, wie sie z.B. in Fig. 4 mit Bezugszeichen 435 gekennzeichnet ist. Nach oben schließt sich daran ein Schaft 234 etwas größeren Durchmessers an, in dessen Inneren die Regelwendel (z.B. 437) angeordnet ist. Weiter oberhalb schließt sich ein Befestigungsabschnitt 285 an, der zur Befestigung an der Elektrozünderhalterung 257 z.B. ein Außengewinde aufweisen kann. Die Elektrozünderhalterung hat im Wesentlichen eine Zylindersymmetrie und kann im Wesentlichen Zylinderform aufweisen.

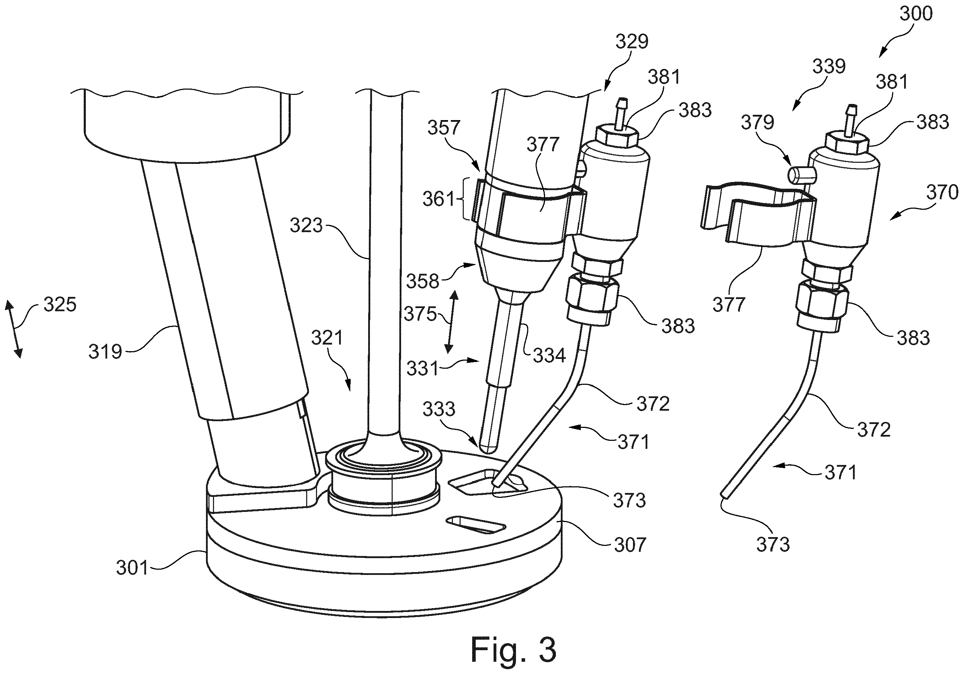

Die Elektrozünderhalterung 257 umfasst einen Kopplungsabschnitt 258, welcher z.B. ein Innengewinde umfassen kann, in das die Glühkerze bzw. allgemein der Elektrozünder 231 eingeschraubt werden kann. Des Weiteren umfasst die Elektrozünderhalterung 257 einen Gasleitungshalter-Befestigungsabschnitt 261, der durch eine ringförmig umlaufende Vertiefung in der Außenoberfläche der Elektrozünderhalterung 257 gebildet ist, und mittels einer Klammer eines Gasleitungshalters für eine Gaszuführungseinrichtung umklammerbar ist, wie z.B. in Fig. 3 ersichtlich ist.

**Fig.** 3 illustriert dabei in schematischer perspektivischer Darstellung eine Flammpunktbestimmungsapparatur 300 gemäß einer weiteren Ausführungsform der vorliegenden Erfindung, wobei Ähnlichkeiten zur in Fig. 2 illustrierten Flammpunktbestimmungsapparatur vorliegen. In Fig. 3 ist ein Zustand einer nicht innerhalb des Behälters 301 befindlichen Zündspitze illustriert, z.B. während die Probe bei geschlossenem Deckel 307 auf eine bestimmte Temperatur gebracht wird.

Im Gegensatz zu den in Fign. 1A, 1B und 2 illustrierten Ausführungsformen umfasst die Vorrichtung 329 zum Zünden der im Behälter 301 befindlichen Probe ferner eine Gaszuführeinrichtung 370 mit einer Gasleitung 371 mit einer Gasaustrittsöffnung 373 (an einem Ende der Gasleitung 371), wobei die Gasleitung 371 abschnittsweise parallel versetzt zu einer Längsrichtung 375 (parallel zu dem Verfahrweg 143, siehe Fig. 1) des Elektrozünders 331 reversibel an der Elektrozünderhalterung 357 anbringbar ist und zwar insbesondere in dem Gasleitungshalter-Befestigungsabschnitt 361. Die Gasleitung 371 weist angrenzend an eine Biegung 372 gerade Abschnitte auf, von denen einer zu der Gasaustrittsöffnung 373 führt. Durch die Biegung 372 kommt die Gasaustrittsöffnung 373 unterhalb der Zündspitze 333 zu liegen.

Im rechten Teil der Fig. 3 ist die Gaszuführeinrichtung 370 abgenommen, d.h. getrennt von der Vorrichtung 129 bzw. 329 zum Zünden und insbesondere getrennt von der Elektrozünderhalterung 357 dargestellt, während auf der linken Seite der Fig. 3 die Gaszuführeinrichtung 370 an der Elektrozünderhalterung 357 mittels einer Klammer 377 angebracht ist. Die Klammer 377 ist Teil einer Gasleitungshalterung 379, die eine zylinderförmige Durchgangsöffnung 381 aufweist, durch die die Gasleitung 371 geführt ist und fixierbar ist, insbesondere mittels einer Klemmschraube 383. Der Gasleitungshalter 379 umfasst ferner die Klammer 377, die ausgebildet ist einen Teil 361 der Elektrozünderhalterung 357 elastisch oder mittels einer Schraube zumindest teilweise zu umklammern. Ferner kann ein Stift vorgesehen sein, der durch eine nicht illustrierte Öffnung innerhalb der Klammer hindurch und in ein Loch in der Elektrozünderhalterung 357 geführt werden kann, um eine definierte vertikale Positionierung der Gaszuführeinrichtung 370, insbesondere der Gasaustrittsöffnung 373 relativ zu der Zündspitze 333, zu ermöglichen.

Der in **Fig. 4** in einer schematischen Längsschnittansicht illustrierte Elektrozünder 431 ist als eine Glühkerze ausgebildet, der in einem vorderen Ende als Glühspitze 433 eine geschlossene Hülse 441 aufweist, in deren Hohlraum eine Glühwendel 435 angeordnet ist. In einem Befestigungsbereich 485 weist der Elektrozünder 431 ein Außengewinde 487 auf, mit dessen Hilfe der Elektrozünder 431 mit der Elektrozünderhalterung (z.B. 157, 257, 357 in Fign. 1 bis 3) gehaltert werden kann bzw. verschraubt werden kann. Ein Verbindungsabschnitt 489 ermöglicht eine elektrische Verbindung des Drahtes, insbesondere der Glühwendel 435 und der Regelwendel 437 mit z.B. einer äußeren Schaltung, z.B. dem Treibermodul 167, welches in Fign. 1A und 1B illustriert ist. Durch den Mantel 441 sind der Innenraum und somit auch die Glühwendel 435 und die Regelwendel 437 gasdicht und flüssigkeitsdicht gegen den Außenraum abgedichtet. Dazu können ein oder mehrere Dichtungen innerhalb des Elektrozünders vorgesehen sein.

Der Elektrozünder kann als eine aus dem Automobilsektor bekannte Glühkerze ausgebildet sein, wie sie z.B. bei Dieselmotoren zum Vorglühen zum Einsatz kommt. Die Kapselung (z.B. Mantel 441) kann empfindliche Teile gegen mechanische Beschädigung schützen. Der Betrieb des in Fig. 1 illustrierten Elektrozünders erfolgt mit Gleichspannung und ohne Hochspannungsgenerator. Ein Unterschied einer Glühkerze zu einem herkömmlich verwendeten Glühdraht für Flammpunktbestimmungstests ist z.B. die Verkapselung. Damit ist die Oberflächengröße und -beschaffenheit signifikant unterschiedlich. Die gemäß einer Ausführungsform der vorliegenden Erfindung verwendete Glühkerze erfordert eine von einem herkömmlich verwendeten Elektrozünder verschiedene Betriebsweise. Zum Beispiel ist für eine funkenerzeugende Zündkerze eine pulsierende Hochspannung von ca. 1 kV erforderlich, wogegen die Glühkerze nicht gepulst werden braucht und ein Betrieb mit gewöhnlicher Netzspannung erfolgen kann. Gemäß einer Ausführungsform der vorliegenden Erfindung wird an den Enden des Drahtes des Elektrozünders eine Spannung von z.B. zwischen 5 V und 10 V, insbesondere zwischen 7,5 V und 8,5 V angelegt, um die Glühkerze zum Glühen zu bringen. Das Material der Spitze kann Keramik sein, die Form der Spitze kann stabförmig sein und homogenes Material umfassen. Die Temperatur der Spitze kann z.B. zwischen 1000°C und 1500°C während eines Zündbetriebes betragen.

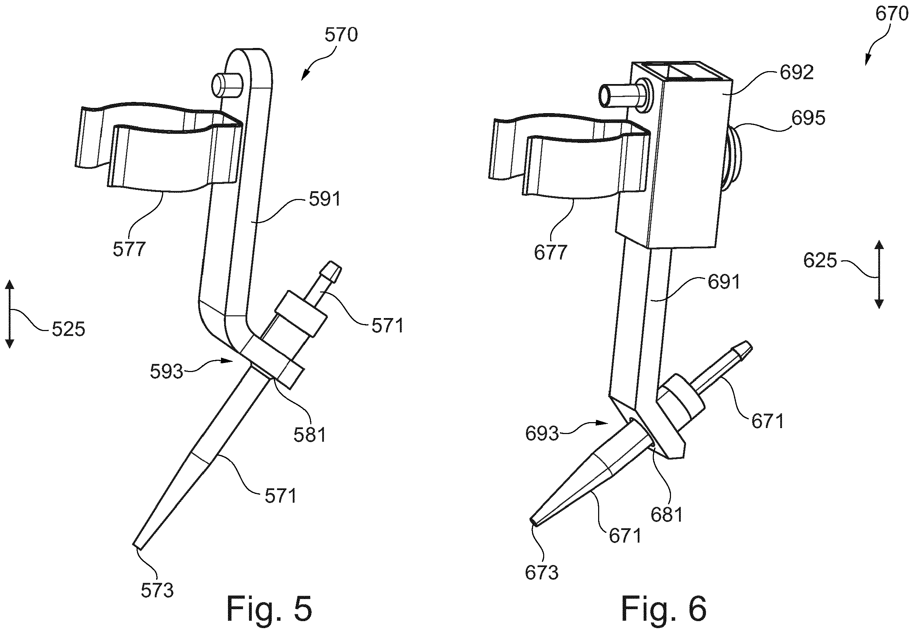

Fign. 5 und 6 illustrieren Gaszuführeinrichtungen 570 bzw. 670 gemäß weiteren Ausführungsformen der vorliegenden Erfindung, die z.B. für die Vorrichtung 129 oder 329 anstatt der Gaszuführeinrichtung 370 vorgesehen sein können.

Im Gegensatz zu der in Fig. 3 illustrierten Gaszuführeinrichtung 370 umfassen die Gaszuführeinrichtungen 570 bzw. 670 jeweils einen im Wesentlichen vertikal (und insbesondere, wenn am Elektrozünder angebracht, parallel zum Elektrozünder) verlaufenden Haltearm 591 bzw. 691, der ein einem oberen Bereich an dem Befestigungsmittel, insbesondere der Klammer 577 bzw. 677, befestigt ist und an einem unteren, (aus der Vertikalen 525 bzw. 625) abgewinkelten Ende 593 bzw. 693 die Durchgangsöffnung 581 bzw. 681 aufweist, durch die die Gasleitung 571 bzw. 671 geführt und darin fixiert ist. Aufgrund der Abwinklung 593 bzw. 693 kann die Gasleitung geradlinig verlaufend ausgebildet sein.

Während der in Fig. 5 illustrierte Haltearm 591 fest an der Klammer 577 angebracht ist, ist der in Fig. 6 illustrierte Haltearm 691 in vertikaler Richtung 625 relativ zu der Klammer 677 verschiebbar. Dazu ist an der Klammer 677 eine Hülse 692 (mit rechteckigem Querschnitt) angebracht, in die der Halterarm (mit rechteckigem Querschnitt) eingeschoben und darin verschiebbar ist, um zu ermöglichen, die (vertikale) Position der Gasaustrittsöffnung 673 einzustellen, insbesondere sie unterhalb der Zündspitze des Elektrozünders zu positionieren. Ist die korrekte Position eingestellt, so kann der Haltearm mittels einer Klemmschraube 695 gesichert werden.

Der Elektrozünder kann zur Zündung eines Flüssig-Gas-Gemisches einer zu untersuchenden Probe (bei gewünschter Elektrozündung) sowie zum Entzünden eines Gases verwendet werden, welches wiederum zum Zünden des Flüssig-Gas-Gemisches der zu untersuchenden Probe verwendet wird (während einer Gaszündung). Der Elektrozünder, insbesondere die Glühkerze, kann in einer mechanischen Halterung verschraubt werden (z.B. Elektrozünderhalterung 157, 257, 357). Ein verkapselter Stecker zur Spannungsversorgung kann im Gehäuse des Gerätes eingebaut sein, so dass offene, für den Anwender zugängliche Kabel vermieden werden. Die Gasleitungshalterung 379 kann auch als ein Adapter bezeichnet werden, welcher erlaubt, eine Gaszuleitung an die Halterung der Glühkerze z.B. mittels einer Klammer zu klemmen. Durch einen im Adapter befindlichen Stift an der hierfür vorgesehenen Bohrung im Elektrozündhalter wird die Gaszuleitung bzw. insbesondere eine Gasaustrittsöffnung korrekt positioniert. Vor und während der Messung stellt das Anzünden des Gases durch den Elektrozünder sicher, dass bei jedem Eintauchprozess eine Gasflamme vorhanden ist. Die Eintauchtiefe des Elektrozünderhalters inklusive des Gaszündungsadapters kann elektronisch so angepasst werden, dass das Entzünden der Proben mittels der Gasflamme und nicht mit der heißen Zündspitze des Elektrozünders garantiert ist.

Im Gegensatz zu herkömmlichen Verfahren wird der Elektrozünder linear bzw. geradlinig in den Tiegel hineinbewegt (d.h. die Spitze wird ohne Verkippen der Zündung von oben in den Tiegel heruntergefahren). Durch den geradlinigen Betrieb, insbesondere die geradlinige bzw. translatorische Verfahrbewegung des Elektrozünders, kann ein manueller Wechsel der Zündungsarten erleichtert werden. Gemäß einer Ausführungsform der vorliegenden Erfindung bleibt der Elektrozünder fest in der Elektrozünderhalterung verbaut und fixiert, auch, wenn die Gaszuführeinrichtung bzw. die Gasleitung an der Elektrozünderhalterung befestigt wird (insbesondere mittels einer Klammer). Die korrekte Eintauchtiefe der jeweiligen Zündungsquelle wird mit der Wahl der Zündungsart elektronisch angepasst und gesteuert.

Die Verwendung eines gekapselten Elektrozünders, insbesondere einer Glühkerze, kann verschiedene Vorteile haben: Durch Verkapselung der geheizten Wendel ist die Oberflächengröße und Beschaffenheit der Glühkerze deutlich vorteilhafter für den Einsatz als Elektrozündung als die konventionelle offene metallische Drahtwendel. Signifikante Verbesserung der Stabilität und Resistenz gegenüber mechanischer Belastung, z.B. bei grobem Berühren von anderen Gegenständen oder Fall auf den Boden während eines Zündungsartwechsels. Die herkömmlich verwendete offene (ungeschützte) Wendel kann infolge eines mechanischen Stoßes komplett verformt und damit unbrauchbar werden.

Betrieb mit Gleich- und/oder Wechselspannung ist ermöglicht, wobei kein Hochspannungsgenerator notwendig ist. Eine mechanische Stabilität des Eintauchmechanismus beim Betrieb als Zündung ist gewährleistet, da die Glühkerze in den Tiegel durch die geradlinige Bewegung ohne Rotation eingeführt werden kann. Eine signifikante verbesserte Betriebssicherheit kann durch Platzierung der Kabel in einem für den Anwender nicht zugänglichen Bereich des Gehäuseinneren erreicht werden. Signifikante Erleichterung des Wechsels der gewünschten Zündungsart kann erreicht werden, wobei kein Tausch der Elektrozündung gegen Gaszündung erforderlich ist. Stattdessen ist die Gaszündung über einen Adapter an der Halterung der Glühkerze montierbar.

## Patentansprüche

1. Vorrichtung (129) zum Zünden einer in einem Behälter (101) befindlichen Probe (103, 105) für einen Flammpunktbestimmungstest und/oder Brennpunktbestimmungstest, aufweisend:
einen Elektrozünder (131), der eine Zündspitze (133) mit umkapseltem elektrischen Draht (435, 437) aufweist; und
eine Verfahreinrichtung (139), die zum Verfahren der Zündspitze (133) des Elektrozünders (131) an eine definierte Position (ze, zg) innerhalb des Behälters (101) ausgebildet ist,
**dadurch gekennzeichnet, dass**
der elektrische Draht (435, 437) derart umkapselt ist, dass die Probe (103, 105) im flüssigen und/oder im gasförmigen Zustand den Draht (435, 437) nicht unmittelbar kontaktiert.

2. Vorrichtung gemäß dem vorangehenden Anspruch, wobei der Elektrozünder als Glühkerze (431), insbesondere als Metall- oder Keramik-Glühkerze, ausgebildet ist.

3. Vorrichtung gemäß einem der vorangehenden Ansprüche, wobei die Verfahreinrichtung (139) mindestens eines der folgenden Merkmale aufweist:
die Verfahreinrichtung (139) ist ausgebildet, die Zündspitze (133) des Elektrozünders (131) entlang einer geradlinigen Verfahrstrecke (143) zu verfahren, die insbesondere im Wesentlichen vertikal verläuft oder einen spitzen Winkel (α) zur Vertikalen (125) einschließt,
die Verfahreinrichtung weist einen Elektromotor (145), vorzugsweise mit einem Kurbeltrieb (150), auf, der mit dem Elektrozünder (131) gekoppelt ist,
die Verfahreinrichtung (139) weist eine Elektrozünderhalterung (157) auf, mittels der der Elektrozünder (131) halterbar ist, insbesondere verschraubbar ist und der Draht elektrisch verbindbar ist und durch ein Gehäuse gekapselt ist,
die Verfahreinrichtung (139) weist eine, insbesondere hülsenförmige, Führung (159) mit einer durch parallele Innenwände begrenzte Führungsöffnung (161) auf, durch die zumindest ein Teil der Elektrozünderhalterung (157) und/oder zumindest ein Teil des Elektrozünders hindurch geführt ist, wobei insbesondere eine Außenoberfläche (163) eines Teils der Elektrozünderhalterung (157) und/oder eines Teils des Elektrozünders beim Verfahren des Elektrozünders an den parallelen Innenwänden (165) der Führung (159) entlanggleitet.

4. Vorrichtung gemäß einem der vorangehenden Ansprüche, ferner aufweisend:
eine Gaszuführeinrichtung (370) mit einer Gasleitung (371) mit Gasaustrittsöffnung (373), wobei die Gasleitung (371) abschnittsweise parallel versetzt zu einer Längsrichtung (375) des Elektrozünders (331), vorzugsweise reversibel, anbringbar ist, wobei die angebrachte Gasleitung (371) bei Verfahren der Zündspitze (333) des Elektrozünders (331) mittels der Verfahreinrichtung synchron mit verfahren wird,
wobei die Verfahreinrichtung insbesondere ausgebildet ist, die Gasaustrittsöffnung (373) an eine definierte Position (zg) innerhalb des Behälters zu verfahren.

5. Vorrichtung gemäß dem vorangehenden Anspruch, wobei die Gaszuführeinrichtung (370) mindestens eines der folgenden Merkmale aufweist:
die Gasaustrittsöffnung (373) der Gasleitung (371) ist unterhalb der Zündspitze (333) des Elektrozünders (331), insbesondere unterhalb entlang der Längsrichtung (375) des Elektrozünders, angeordnet, so dass mittels Betreibens des Elektrozünders ein aus der Gasaustrittsöffnung (373) austretendes Gas entzündbar ist,
die Gasleitung (371) weist eine derart ausgebildete Biegung (372) auf, dass die Gasaustrittsöffnung (373) unterhalb der Zündspitze (333) des Elektrozünders (331), insbesondere unterhalb entlang der Längsrichtung (375) des Elektrozünders, angeordnet ist und dass mittels Betreibens des Elektrozünders ein aus der Gasaustrittsöffnung (373) austretendes Gas entzündbar ist,
die Gaszuführeinrichtung (370) ist eingerichtet, in einem Flammpunktbestimmungstest und/oder Brennpunktbestimmungstest als Zündung eingesetzt werden zu können, ohne den Elektrozünder (331) in seiner Position oder Orientierung zu verändern.

6. Vorrichtung gemäß einem der zwei vorangehenden Ansprüche, wobei zur, vorzugsweise, reversiblen Anbringung der Gasleitung ein Gasleitungshalter (379) vorgesehen ist, der
eine, insbesondere zylinderförmige, Durchgangsöffnung (381) aufweist, durch die die Gasleitung geführt und fixierbar ist, insbesondere mittels einer Klemmschraube (383), aufweist und der
Befestigungsmittel, insbesondere eine Klammer (377) und/oder eine Klemme, aufweist, die ausgebildet sind, die Gaszuführeinrichtung (370) an einem Teil (361) des Elektrozünders und/oder der Elektrozünderhalterung (157), insbesondere elastisch und/oder mittels einer Schraube und/oder magnetisch, zumindest teilweise zu fixieren,
insbesondere wobei die Durchgangsöffnung (581, 681), innerhalb derer die Gasleitung (571, 671) fixiert ist, an einem abgewinkelten Ende (593, 693) eines im Wesentlichen vertikal verlaufenden Haltearms (591, 691) vorgesehen ist, der an dem Befestigungsmittel (577, 677), insbesondere vertikal verstellbar, angebracht ist.

7. Vorrichtung gemäß einem der vorangehenden Ansprüche, wobei ferner ein Stift vorgesehen ist, der durch eine Durchgangsöffnung der Klammer hindurch und in ein Loch des Elektrozünders und/oder der Elektrozünderhalterung steckbar ist, um eine definierte vertikale Positionierung der Gasaustrittsöffnung relativ zu der Zündspitze zu erreichen.

8. Vorrichtung gemäß einem der vorangehenden Ansprüche, wobei ferner ein Magnet vorgesehen ist, auf den von einem an einem Teil (361) des Elektrozünders und/oder der Elektrozünderhalterung (357) fixierten Magneten oder magnetisierbaren Material eine magnetische Anziehungskraft ausgeübt wird, um eine definierte vertikale Positionierung der Gasaustrittsöffnung (373) relativ zu der Zündspitze (333) zu erreichen.

9. Vorrichtung gemäß einem der vorangehenden Ansprüche, wobei die Verfahreinrichtung ausgebildet ist, in Abhängigkeit von einer gewünschten Zündungsart, den Elektrozünder (131) selektiv um eine erste Verfahrstrecke oder eine zweite Verfahrstrecke nach unten zu verfahren, um entweder die Zündspitze (133) des Elektrozünders (131) oder, bei angebrachter Gasleitung (371), die Gasaustrittsöffnung (373) an die jeweils definierte Position (ze, zg) zu bewegen.

10. Vorrichtung gemäß einem der vorangehenden Ansprüche, wobei die Zündspitze (433) eine aus Metall und/oder Keramik gefertigte, an einem vorderen Ende geschlossene Hülse (441) aufweist, in deren Hohlraum in einem vorderen Bereich eine Glühwendel (435) angeordnet ist.

11. Vorrichtung gemäß dem vorangehenden Anspruch, wobei der Elektrozünder (431) ferner in dem Hohlraum in einem hinteren Bereich eine Regelwendel (437) aufweist, insbesondere mit einem mit der Temperatur ansteigenden Widerstand, die mit der Glühwendel (435) elektrisch verbunden ist.

12. Vorrichtung gemäß einem der vorangehenden Ansprüche, wobei die Vorrichtung ferner aufweist:
ein Treibermodul (167), das ausgebildet und verbunden ist, eine Gleichspannung zwischen Enden des Drahtes (435) des Elektrozünders anzulegen, um einen elektrischen Gleichstrom, insbesondere zwischen 5 Ampere und 15 Ampere, durch die Glühwendel zu führen.

13. Flammpunktbestimmungsapparatur (100, 200, 300), insbesondere auch zur Brennpunktbestimmung ausgebildet, aufweisend:
einen Behälter (101) zum Aufnehmen einer zu untersuchenden Probe (103, 105);
insbesondere einen Deckel (107) zum Verschließen des Behälters (101), wobei der Deckel (107) eine verschließbare Deckelöffnung (109) aufweist;
eine Temperiereinrichtung (115) zum Heizen der Probe mit einer definierten Heizrate und/oder auf eine definierte Temperatur; und
eine Vorrichtung (129) zum Zünden der in dem Behälter befindlichen Probe gemäß einem der vorangehenden Ansprüche,
wobei bei vorhandenem Deckel die Vorrichtung zum Zünden derart angeordnet ist, dass bei Verfahren der Zündspitze (133) des Elektrozünders an die definierte Position innerhalb des Behälters die Zündspitze durch die Deckelöffnung (107) geführt wird.

14. Verfahren eines Zündens einer in einem Behälter (101) befindlichen Probe (103, 105) während eines Flammpunktbestimmungstests und/oder Brennpunktbestimmungstests, aufweisend:
Verfahren einer Zündspitze (133) eines Elektrozünders (131) oder einer Gasaustrittsöffnung (373) einer mit dem Elektrozünder (131) gekoppelten Gasleitung (371) an eine definierte Position (ze, zg) innerhalb des Behälters (101, 301),
wobei der Elektrozünder (131, 331) eine Zündspitze (133, 333) mit umkapseltem elektrischen Draht (435) aufweist, **dadurch gekennzeichnet, dass** der elektrische Draht (435, 437) derart umkapselt ist, dass die Probe (103, 105) im flüssigen und/oder im gasförmigen Zustand den Draht (435, 437) nicht unmittelbar kontaktiert.

## Claims

1. A device (129) for igniting a sample (103, 105) contained in a container (101) for a flash point determination test and/or a fire point determination test, comprising:
an electric igniter (131) having an ignition tip (133) with an encapsulated electric wire (435, 437); and
a traversing device (139) adapted to traverse the ignition tip (133) of the electric igniter (131) to a defined position (ze, zg) within the container (101), **characterized in that**
the electric wire (435, 437) is encapsulated in such a way that the sample (103, 105) in the liquid and/or in the gaseous state does not directly contact the wire (435, 437).

2. The device according to the preceding claim, wherein the electric igniter is configured as a glow plug (431), in particular as a metal or ceramic glow plug.

3. The device according to any one of the preceding claims, wherein the traversing device (139) has at least one of the following features:
the traversing device (139) is configured to traverse the ignition tip (133) of the electric igniter (131) along a rectilinear traverse path (143), which in particular extends substantially vertically or includes an acute angle (α) to the vertical (125),
the traversing device has an electric motor (145), preferably with a crank mechanism (150), which is coupled to the electric igniter (131),
the traversing device (139) has an electric igniter holder (157) by means of which the electric igniter (131) can be held, in particular screwed, and the wire can be electrically connected and is encapsulated by a housing,
the traversing device (139) has a guide (159), in particular a sleeve-shaped guide, with a guide opening (161) delimited by parallel inner walls, through which guide opening at least a part of the electric igniter holder (157) and/or at least a part of the electric igniter is guided, in particular an outer surface (163) of a part of the electric igniter holder (157) and/or a part of the electric igniter sliding along the parallel inner walls (165) of the guide (159) during traversing of the electric igniter.

4. The device according to any one of the preceding claims, further comprising:
a gas supply device (370) comprising a gas conduit (371) with a gas outlet opening (373), wherein the gas conduit (371) is attachable in sections parallel offset to a longitudinal direction (375) of the electric igniter (331), preferably reversibly,
wherein the attached gas line (371) is moved synchronously with the ignition tip (333) of the electric igniter (331) by means of the traversing device when the ignition tip (333) of the electric igniter (331) is moved,
wherein the traversing device is in particular configured to traverse the gas outlet opening (373) to a defined position (zg) within the container.

5. The device according to the preceding claim, wherein the gas supply device (370) has at least one of the following features:
the gas outlet opening (373) of the gas conduit (371) is arranged below the ignition tip (333) of the electric igniter (331), in particular below along the longitudinal direction (375) of the electric igniter, so that by means of operating the electric igniter a gas emerging from the gas outlet opening (373) is ignitable,
the gas line (371) has a bend (372) formed in such a way that the gas outlet opening (373) is arranged below the ignition tip (333) of the electric igniter (331), in particular below along the longitudinal direction (375) of the electric igniter, and in that a gas emerging from the gas outlet opening (373) can be ignited by means of operating the electric igniter,
the gas supply device (370) is arranged to be able to be used as ignition in a flash point determination test and/or a fire point determination test without changing the position or orientation of the electric igniter (331).

6. The device according to one of the two preceding claims, wherein for, preferably, reversible attachment of the gas line, a gas line holder (379) is provided which
has a through opening (381), in particular cylindrical, through which the gas line is guided and can be fixed, in particular by means of a clamping screw (383), and which
has fastening means, in particular a clamp (377) and/or a clip, which are configured to fix the gas supply device (370) at least partially to a part (361) of the electric igniter and/or the electric igniter holder (157), in particular elastically and/or by means of a screw and/or magnetically,
in particular wherein the through opening (581, 681), within which the gas line (571, 671) is fixed, is provided at an angled end (593, 693) of a substantially vertically extending holding arm (591, 691) which is attached to the fixing means (577, 677), in particular in a vertically adjustable manner.

7. The device according to any one of the preceding claims, wherein a pin is further provided, which is insertable through a through hole of the bracket and into a hole of the electric igniter and/or the electric igniter holder, in order to achieve a defined vertical positioning of the gas outlet opening relative to the ignition tip.

8. The device according to any one of the preceding claims, further comprising a magnet to which a magnetic attractive force is exerted by a magnet or magnetizable material fixed to a part (361) of the electric igniter and/or the electric igniter holder (357), in order to achieve a defined vertical positioning of the gas outlet opening (373) relative to the ignition tip (333).

9. The device according to one of the preceding claims, wherein the traversing device is configured to selectively traverse the electric igniter (131) downwards by a first traverse distance or a second traverse distance, depending on a desired ignition mode, in order to move either the ignition tip (133) of the electric igniter (131) or, with the gas line (371) attached, the gas outlet opening (373) to the respective defined position (ze, zg).

10. The device according to any of the preceding claims, wherein the ignition tip (433) comprises a sleeve (441) made of metal and/or ceramic, closed at a front end, in the cavity of which a glow coil (435) is arranged in a front region.

11. The device according to the preceding claim, wherein the electric igniter (431) further comprises in the cavity in a rear region a control coil (437), in particular with a resistance increasing with the temperature, which is electrically connected to the glow coil (435).

12. The device according to any one of the preceding claims, the device further comprising:
a driver module (167) configured and connected to apply a DC voltage between ends of the wire (435) of the electric igniter to pass a DC electric current, in particular between 5 amperes and 15 amperes, through the glow coil.

13. A flash point determination apparatus (100, 200, 300), in particular also configured for flash point determination, comprising:
a container (101) for holding a sample (103, 105) to be examined;
in particular a lid (107) for closing the container (101),
the lid (107) having a closable lid opening (109);
a temperature control device (115) for heating the sample at a defined heating rate and/or to a defined temperature; and
a device (129) for igniting the sample located in the container according to any one of the preceding claims, wherein, when the lid is present, the device is arranged for ignition such that when the ignition tip (133) of the electric igniter is moved to the defined position within the container, the ignition tip is guided through the lid opening (107).

14. A method of igniting a sample (103, 105) located in a container (101) during a flash point determination test and/or fire point determination test, comprising:
moving an ignition tip (133) of an electric igniter (131) or a gas outlet (373) of a gas line (371) coupled to the electric igniter (131) to a defined position (ze, zg) within the container (101, 301),
wherein the electric igniter (131, 331) comprises an ignition tip (133, 333) with an encapsulated electric wire (435),
**characterized in that**
the electric wire (435, 437) is encapsulated such that the sample (103, 105) in the liquid and/or gaseous state does not directly contact the wire (435, 437).

## Revendications

1. Dispositif (129) permettant d'allumer un échantillon (103, 105) se trouvant dans un récipient (101) en vue d'un test de détermination de point d'éclair et/ou un test de détermination de point d'inflammation, présentant :
un allumeur électrique (131) présentant une pointe d'allumage (133) avec un fil électrique (435, 437) encapsulé ; et
un dispositif de déplacement (139) conçu pour déplacer la pointe d'allumage (133) de l'allumeur électrique (131) vers une position définie (ze, zg) à l'intérieur du récipient (101),
**caractérisé en ce que**
le fil électrique (435, 437) est encapsulé de telle manière que l'échantillon (103, 105) à l'état liquide et/ou à l'état gazeux ne vient pas directement en contact avec le fil (435, 437).

2. Dispositif selon la revendication précédente, **caractérisé en ce que** l'allumeur électrique est conçu sous forme de bougie de préchauffage (431), en particulier sous forme de bougie de préchauffage en métal ou en céramique.

3. Dispositif selon l'une quelconque des revendications précédentes, **caractérisé en ce que** le dispositif de déplacement (139) présente au moins l'une des caractéristiques ci-dessous :
le dispositif de déplacement (139) est conçu pour déplacer la pointe d'allumage (133) de l'allumeur électrique (131) le long d'un trajet de déplacement rectiligne (143) s'étendant en particulier de manière essentiellement verticale ou formant un angle aigu (α) avec la verticale (125),
le dispositif de déplacement présente un moteur électrique (145), de manière préférée avec un mécanisme à manivelle (150) couplé à l'allumeur électrique (131),
le dispositif de déplacement (139) présente un support d'allumeur électrique (157) au moyen duquel l'allumeur électrique (131) peut être maintenu, en particulier peut être vissé, et le fil peut être relié électriquement et est encapsulé grâce à un boîtier,
le dispositif de déplacement (139) présente un guide (159), en particulier en forme de manchon, avec un orifice de guidage (161) délimité par des parois intérieures parallèles et à travers lequel au moins une partie du support d'allumeur électrique (157) et/ou au moins une partie de l'allumeur électrique est guidée, dans lequel en particulier une surface extérieure (163) d'une partie du support d'allumeur électrique (157) et/ou d'une partie de l'allumeur électrique glisse le long des parois intérieures parallèles (165) du guide (159) lors du déplacement de l'allumeur électrique.

4. Dispositif selon l'une quelconque des revendications précédentes, présentant en outre :
un dispositif d'alimentation en gaz (370) avec une conduite de gaz (371) avec un orifice de sortie de gaz (373), **caractérisé en ce que** la conduite de gaz (371) peut être mise en place, de manière préférée de manière réversible, en étant décalée parallèlement par rapport à une direction longitudinale (375) de l'allumeur électrique (331), dans lequel la conduite de gaz (371) mise en place est déplacée de manière synchrone au moyen du dispositif de déplacement lors du déplacement de la pointe d'allumage (333) de l'allumeur électrique (331),
dans lequel le dispositif de déplacement est conçu en particulier pour déplacer l'orifice de sortie de gaz (373) vers une position définie (zg) à l'intérieur du récipient.

5. Dispositif selon la revendication précédente, **caractérisé en ce que** le dispositif d'alimentation en gaz (370) présente au moins l'une des caractéristiques ci-dessous :
l'orifice de sortie de gaz (373) de la conduite de gaz (371) est agencé en dessous de la pointe d'allumage (333) de l'allumeur électrique (331), en particulier en dessous et le long de la direction longitudinale (375) de l'allumeur électrique, de sorte qu'un gaz sortant de l'orifice de sortie de gaz (373) peut être allumé grâce à l'actionnement de l'allumeur électrique,
la conduite de gaz (371) présente un coude (372) conçu de telle manière que l'orifice de sortie de gaz (373) est agencé en dessous de la pointe d'allumage (333) de l'allumeur électrique (331), en particulier en dessous et le long de la direction longitudinale (375) de l'allumeur électrique et qu'un gaz sortant de l'orifice de sortie de gaz (373) peut être allumé grâce à l'actionnement de l'allumeur électrique,
le dispositif d'alimentation en gaz (370) est conçu pour pouvoir être utilisé comme allumage dans un test de détermination de point d'éclair et/ou un test de détermination de point d'inflammation sans modifier la position ou l'orientation de l'allumeur électrique (331).

6. Dispositif selon l'une quelconque des deux revendications précédentes, **caractérisé en ce qu'**un support de conduite de gaz (379) est prévu pour une mise en place, de manière préférée réversible, de la conduite de gaz, qui
présente un orifice traversant (381), en particulier cylindrique, à travers lequel la conduite de gaz est guidée et peut être immobilisée, en particulier au moyen d'une vis de serrage (383), et qui
présente des moyens de fixation, en particulier une pince (377) et/ou un étrier conçu(s) pour immobiliser au moins partiellement, en particulier de manière élastique et/ou au moyen d'une vis et/ou de manière magnétique, le dispositif d'alimentation en gaz (370) au niveau d'une partie (361) de l'allumeur électrique et/ou du support d'allumeur électrique (157),
en particulier dans lequel l'orifice traversant (581, 681) à l'intérieur duquel est immobilisée la conduite de gaz (571, 671) est fourni au niveau d'une extrémité coudée (593, 693) d'un bras de maintien (591, 691) qui s'étend de manière essentiellement verticale et qui est mis en place, en particulier de manière à pouvoir être réglé de manière verticale, au niveau du moyen de fixation (577, 677).

7. Dispositif selon l'une quelconque des revendications précédentes, **caractérisé en ce qu'**une cheville pouvant être enfichée dans un orifice traversant de la pince et dans un trou de l'allumeur électrique et/ou du support d'allumeur électrique est en outre fournie afin d'obtenir un positionnement vertical défini de l'orifice de sortie de gaz par rapport à la pointe d'allumage.

8. Dispositif selon l'une quelconque des revendications précédentes, **caractérisé en ce qu'**un aimant sur lequel une force d'attraction magnétique est exercée par des aimants ou un matériau magnétisable immobilisé(s) au niveau d'une partie (361) de l'allumeur électrique et/ou du support d'allumeur électrique (357) est en outre fourni afin d'obtenir un positionnement vertical défini de l'orifice de sortie de gaz (373) par rapport à la pointe d'allumage (333).

9. Dispositif selon l'une quelconque des revendications précédentes, **caractérisé en ce que** le dispositif de déplacement est conçu, en fonction d'un type d'allumage souhaité, pour déplacer l'allumeur électrique (131) de manière sélective vers le bas selon un premier trajet de déplacement ou un second trajet de déplacement afin de déplacer la pointe d'allumage (133) de l'allumeur électrique (131) ou, si la conduite de gaz (371) est mise en place, l'orifice de sortie de gaz (373) vers la position définie (ze, zg) respective.

10. Dispositif selon l'une quelconque des revendications précédentes, **caractérisé en ce que** la pointe d'allumage (433) présente un manchon (441), en métal et/ou en céramique, fermé au niveau d'une extrémité avant, et dans la cavité duquel un filament chauffant (435) est agencé dans une région avant.

11. Dispositif selon la revendication précédente, **caractérisé en ce que** l'allumeur électrique (431) présente en outre un filament régulateur (437) situé dans une région arrière de la cavité, en particulier avec une résistance qui augmente avec la température, et relié électriquement au filament chauffant (435).

12. Dispositif selon l'une quelconque des revendications précédentes, **caractérisé en ce que** le dispositif présente en outre :
un module d'excitation (167) conçu et relié de manière à appliquer une tension continue entre les extrémités du fil (435) de l'allumeur électrique afin de faire passer un courant électrique continu, en particulier compris entre 5 ampères et 15 ampères, à travers le filament chauffant.

13. Dispositif de détermination de point d'éclair (100, 200, 300), en particulier conçu également pour déterminer le point d'inflammation, présentant :
un récipient (101) permettant d'accueillir un échantillon (103, 105) à examiner ;
en particulier un couvercle (107) permettant de fermer le récipient (101), **caractérisé en ce que** le couvercle (107) présente un orifice de couvercle (109) pouvant être fermé ;
un dispositif de contrôle de température (115) permettant de chauffer l'échantillon à une vitesse de chauffage définie et/ou à une température définie ; et
un dispositif (129) selon l'une quelconque des revendications précédentes permettant d'allumer l'échantillon se trouvant dans le récipient,
dans lequel, si le couvercle est présent, le dispositif d'allumage est agencé de telle manière que la pointe d'allumage est guidée à travers l'orifice de couvercle (107) vers la position définie à l'intérieur du récipient lors du déplacement de la pointe d'allumage (133) de l'allumeur électrique.

14. Procédé d'allumage d'un échantillon (103, 105) se trouvant dans un récipient (101) au cours d'un test de détermination de point d'éclair et/ou d'un test de détermination de point d'inflammation, présentant :
un déplacement d'une pointe d'allumage (133) d'un allumeur électrique (131) ou d'un orifice de sortie de gaz (373) d'une conduite de gaz (371) couplée à l'allumeur électrique (131) vers une position définie (ze, zg) à l'intérieur du récipient (101, 301),
dans lequel l'allumeur électrique (131, 331) présente une pointe d'allumage (133, 333) avec un fil électrique (435) encapsulé, **caractérisé en ce que**
le fil électrique (435, 437) est encapsulé de telle manière que l'échantillon (103, 105) à l'état liquide et/ou à l'état gazeux ne vient pas directement en contact avec le fil (435, 437).
